(19) **Europäisches Patentamt European Patent Office Office européen des brevets**

(11) **EP 4 285 159 B1**

(12) **FASCICULE DE BREVET EUROPEEN**

(45) Date de publication et mention de la délivrance du brevet:
**10.12.2025 Bulletin 2025/50**

(21) Numéro de dépôt: **22702271.2**

(22) Date de dépôt: **28.01.2022**

(51) Classification Internationale des Brevets (IPC):
**G01S 19/53** (2010.01)     **G01S 19/36** (2010.01)
**G01C 21/00** (2006.01)

(52) Classification Coopérative des Brevets (CPC):
**G01S 19/53; G01S 19/36;** G01C 21/005

(86) Numéro de dépôt international:
**PCT/EP2022/052005**

(87) Numéro de publication internationale:
**WO 2022/162123 (04.08.2022 Gazette 2022/31)**

(54) **DISPOSITIF DE DÉTERMINATION DE L'ATTITUDE D'UN PORTEUR, ET SYSTÈME D'AIDE AU PILOTAGE D'UN PORTEUR ET PROCÉDÉ DE DÉTERMINATION ASSOCIÉS**

VORRICHTUNG ZUR BESTIMMUNG DER LAGE EINES TRÄGERS UND ZUGEHÖRIGES SYSTEM ZUR UNTERSTÜTZUNG DER FÜHRUNG EINES TRÄGERS UND BESTIMMUNGSVERFAHREN

DEVICE FOR DETERMINING THE ATTITUDE OF A CARRIER, AND ASSOCIATED SYSTEM FOR ASSISTING WITH THE PILOTING OF A CARRIER AND DETERMINATION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2021 FR 2100864**

(43) Date de publication de la demande:
**06.12.2023 Bulletin 2023/49**

(73) Titulaire: **THALES**
**92400 Courbevoie (FR)**

(72) Inventeurs:
• **DEPRAZ, David**
  **26000 VALENCE (FR)**
• **MEHLEN, Christian**
  **26000 VALENCE (FR)**

(74) Mandataire: **Lavoix**
**2, place d'Estienne d'Orves**
**75441 Paris Cedex 09 (FR)**

(56) Documents cités:
**EP-A1- 1 775 599     EP-A1- 2 674 783**
**EP-A1- 2 758 805     WO-A1-96/28747**

• **BELOKONOV I V ET AL: "Estimation of the nanosatellite attitude and angular rate by analyzing the navigation spacecraft geometrical visibility using the controllable pattern of navigation antenna", 2017 24TH SAINT PETERSBURG INTERNATIONAL CONFERENCE ON INTEGRATED NAVIGATION SYSTEMS (ICINS), CONCERN CSRI ELEKTROPRIBOR, JSC, 29 May 2017 (2017-05-29), pages 1 - 4, XP033133487, DOI: 10.23919/ICINS.2017.7995676**

**Description**

La présente invention concerne un dispositif de détermination de l'attitude d'un porteur.

La présente invention concerne également un système d'aide au pilotage d'un porteur et un procédé de détermination de l'attitude de ce porteur, associés à ce dispositif de détermination.

Le domaine de l'invention est celui des récepteurs GNSS.

En particulier, par un récepteur GNSS, on entend récepteur qui permet de recevoir des signaux GNSS, c'est-à-dire des signaux issus d'un ou de plusieurs systèmes de navigation par satellite (« Global Navigation Satellite System » en anglais) et à partir de ces signaux, de déterminer une solution de navigation comprenant la position et la vitesse.

Le domaine d'application de l'invention est celui du contrôle de pilotage d'un porteur et notamment, le contrôle de l'attitude d'un tel porteur. De manière connue en soi, l'attitude d'un porteur comprend le cap, le roulis et le tangage de celui-ci.

Dans l'état de la technique, il existe déjà de nombreux dispositifs permettant de déterminer l'attitude d'un porteur.

Parmi ces dispositifs, on connait notamment des méthodes de détermination d'attitude en utilisant un récepteur GNSS selon lesquelles le récepteur analyse les signaux GNSS reçus par un ensemble d'antennes, de manière à mesurer l'écart de phase de porteuse et en déduire l'orientation de la base d'antennes.

Toutefois, ces méthodes mettent en œuvre des récepteurs GNSS de conception spécifique, généralement plus complexes et moins répandus que les récepteurs GNSS fournissant le seul service de localisation. Ces récepteurs de conception spécifique doivent en effet interfacer avec plusieurs antennes, soit par un traitement parallèle des signaux d'antennes, soit par un traitement séquentiel des antennes. Dans ce second type de solutions, le récepteur connecte son entrée radiofréquence successivement à chaque antenne via un commutateur électronique rapide, et analyse les bribes de signaux reçus pour mesurer l'écart de phase de porteuse entre les antennes.

On connait également une méthode de localisation d'un porteur décrite dans EP 2 674 783 A1.

La présente invention a pour but de proposer un dispositif de détermination de l'attitude d'un porteur qui fonctionne avec un récepteur GNSS doté du seul service de localisation.

À cet effet, l'invention a pour but un dispositif de détermination conforme aux caractéristiques de la revendication 1.

Suivant d'autres aspects avantageux de l'invention, le dispositif de détermination comprend une ou plusieurs des caractéristiques des revendications 2 à 11.

L'invention a également pour objet un système d'aide au pilotage conforme aux caractéristiques de la revendication 12.

L'invention a également pour objet un procédé de détermination de l'attitude d'un porteur, conforme aux caractéristiques de la revendication 13.

Ces caractéristiques et avantages de l'invention apparaitront dans la lecture de la description qui va suivre, donnée à titre d'exemple non limitative, est faite en référence aux dessins annexés, sur lesquels :

- [Fig 1] la figure 1 est une vue schématique d'un système d'aide au pilotage d'un porteur selon l'invention, le système comprenant notamment un dispositif de détermination selon l'invention et deux antennes dans l'exemple de cette figure ;

- [Fig 2] la figure 2 est une vue schématique de la disposition des antennes de la figure 1 ;

- [Fig 3] la figure 3 est un organigramme d'un procédé de détermination mis en œuvre par le dispositif de détermination de la figure 1 ;

- [Fig 4] la figure 4 est une vue schématique expliquant le fonctionnement du dispositif de détermination de la figure 1.

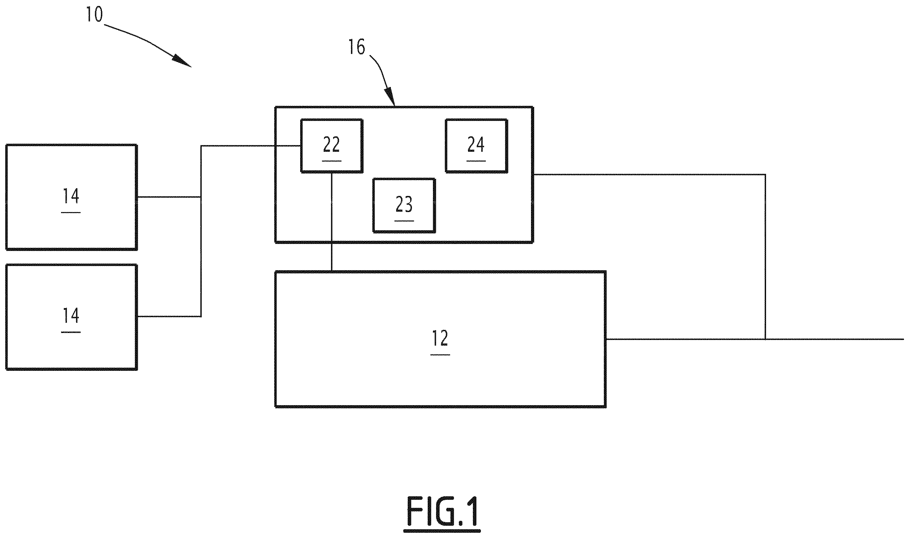

Le système d'aide au pilotage 10 de la figure 1 permet de géolocaliser un porteur dans lequel ce système est embarqué et de déterminer l'attitude du porteur. Ces informations sont par exemple utilisables par un pilote pour piloter le porteur de manière au moins partiellement manuelle et/ou par un système avionique pour piloter le porteur de manière au moins partiellement automatique.

Le porteur présente par exemple un aéronef, tel qu'un drone, se déplaçant dans l'espace selon trois dimensions, ou alors un véhicule terrestre ou maritime se déplaçant dans un plan selon deux dimensions, ou alors par exemple, un véhicule ferroviaire se déplaçant selon une seule direction en suivant une voie ferrée.

Le porteur définit un repère associé à son corps. L'orientation de ce repère par rapport à un repère fixe, par exemple un repère terrestre, définit alors l'attitude du porteur. Cette orientation peut être décrite par trois angles connus dans l'état de la technique sous les noms de cap, de roulis et de tangage.

Le porteur définit en outre un axe longitudinal, autour duquel est définie la rotation créant l'angle de roulis, et des axes transversaux et normaux perpendiculaires à l'axe longitudinal.

Le système d'aide au pilotage 10 comprend un récepteur GNSS 12, une ou plusieurs antennes 14 et un dispositif de détermination 16.

La ou chaque antenne 14 est connue en soi et permet notamment de recevoir des signaux GNSS issus d'un ou de plusieurs systèmes globaux de positionnement par satellite, tels que par exemple le système GPS, Galileo ou GLONASS.

En particulier, comme cela est connu en soi, la ou chaque antenne 14 définit un centre de phase et est disposée dans une position connue par rapport au porteur.

La position de la ou de chaque antenne 14 est ainsi connue à tout moment dans le repère du porteur. Cela signifie en particulier que les positions du centre de phase de la ou de chaque antenne 14 sont également connues dans le même repère.

Le nombre d'antennes 14 est choisi selon les exemples de réalisation décrits en détail par la suite.

En particulier, selon un premier exemple de réalisation (non-illustré sur les figures), une seule antenne 14 est utilisée. Cette antenne 14 peut être mobile dans le repère du porteur ou fixe. Lorsque l'antenne 14 est mobile, elle est par exemple montée sur un actionneur prévu à cet effet.

Selon cet exemple de réalisation, le terme « centre de phase apparent » utilisé par la suite désigne le centre de phase de cette antenne 14.

Selon un deuxième exemple de réalisation (illustré sur les figures), plusieurs antennes 14 sont utilisées. Chacune de ces antennes 14 présente par exemple une antenne fixe dans le repère du porteur.

Selon cet exemple de réalisation, le terme « centre de phase apparent » désigne le centre de phase de l'antenne 14 active en instant donné ou lorsque plusieurs antennes sont actives en même instant et les signaux issus de ces antennes sont superposés, le centre de phase obtenu après la superposition des centres de phase de ces antennes 14 actives.

Dans l'exemple de la figure 1, deux antennes 14 sont illustrées.

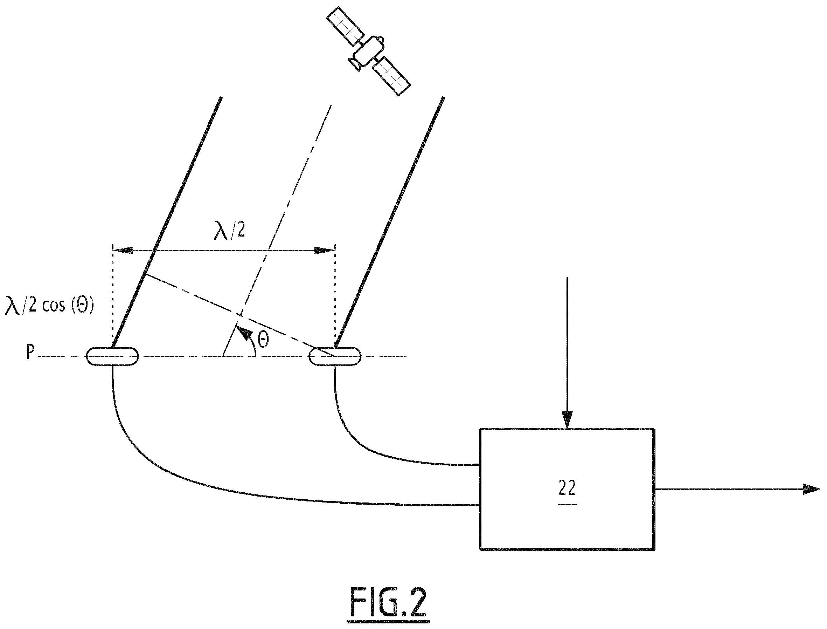

Les positions respectives de ces antennes 14 sont illustrées plus en détail sur la figure 2.

En particulier, dans l'exemple de cette figure 2, les antennes 14 sont disposées dans un même plan P.

En outre, les antennes 14 sont éloignées l'une de l'autre, d'une demi longueur d'onde des signaux GNSS.

Cela signifie que les antennes 14 sont éloignées l'une de l'autre à une dizaine de centimètres.

Il est possible d'éloigner les antennes 14 l'une de l'autre selon une autre distance. De préférence, cette distance est inférieure à une longueur d'onde des signaux GNSS.

Cette distance entre un couple d'antennes 14 sera désignée par la suite par $d$. Dans l'exemple de la Figure 2, $d = \lambda/2$.

De manière générale, dans le mode de réalisation utilisant plusieurs antennes, les positions relatives des antennes les unes par rapport aux autres et par rapport au porteur sont connues.

On comprend ainsi que dans une réalisation la trajectoire du centre de phase dans le référentiel du porteur est obtenue en appliquant un déplacement mécanique d'une seule antenne suivant un chemin commandé, et que dans une autre réalisation celui-ci est obtenu en commutant successivement plusieurs antennes, dont la position est connue dans le référentiel du porteur, et suivant un ordre et un rapport cyclique commandés.

Le récepteur GNSS 12 est connu en soi. Il est d'un service de localisation qui fournit des mesures de position du porteur, sous forme de trois coordonnées dans le repère géographique, et des mesures de vitesse du porteur, sous forme de trois coordonnées dans le repère géographique, à partir de l'observation des signaux reçus d'une seule antenne. Il peut fournir également des mesures de pseudodistance et de pseudovitesse pour chacun des satellites poursuivis. Ces différents types de mesures sont nommées valeurs observables par la suite.

Ces valeurs observables sont déterminées de manière connue en soi, notamment en appliquant un filtrage des signaux reçus de la part de l'antenne, en faisant des corrélations ainsi que d'autres types de traitement de ces signaux.

En particulier, ce récepteur 12 est connecté soit à la seule antenne 14, lorsque l'antenne est associée à un dispositif de mise en mouvement, soit à un module 22 (expliqué en détail ci-dessous) des antennes 14 quand elles sont plusieurs, comme cela est visible sur la figure 1.

Le dispositif de détermination 16 permet de déterminer l'attitude du porteur en analysant notamment la valeur observable issue du récepteur GNSS 12. L'attitude du porteur est déterminée sous l'hypothèse que les signaux GNSS se propagent selon des trajets directs. Autrement dit, cette attitude est déterminée sous l'hypothèse que des multitrajets, c'est-à-dire des signaux parasites dus à la réflexion spéculaire des signaux satellite, sont sensiblement absents ou négligeables. Cela est le cas notamment lorsque le porteur se déplace au-dessus d'une certaine altitude ou dans un environnement dégagé, par exemple dans un environnement hors milieu urbain.

En référence à la figure 1, le dispositif de détermination 16 comprend un module de mise en mouvement 22, un module de commande 23 et un module de détermination 24.

Chacun des modules 23 et 24 se présente par exemple sous forme d'un logiciel mis en œuvre par un calculateur adapté et/ou au moins partiellement sous la forme d'une composante matérielle, par exemple sous la forme d'un circuit logique programmable de type FPGA (de l'anglais « Field-programmable Gate Array »).

Le module de mise en mouvement 22 permet d'engendrer un mouvement du centre de phase apparent de la ou des antennes 14 selon une loi de commande prédéterminée.

Le module de mise en mouvement 22 permet en outre de recevoir les signaux reçus par la ou chaque antenne pour les transmettre au récepteur 12. Par ailleurs, dans le cas d'une pluralité d'antennes, le module 22 permet de combiner les signaux reçus avant de les transmettre au récepteur 12.

Selon le premier exemple de réalisation, c'est-à-dire lorsque le système 10 comprend une seule antenne 14, le mouvement engendré par ce module 22 est de nature mécanique.

Autrement dit, dans ce cas, le module de mise en mouvement 22 permet de contrôler soit l'actionneur mécanique sur lequel l'antenne 14 est montée lorsqu'il s'agit d'une antenne mobile, soit au moins un actionneur du porteur lui-même pour déplacer le porteur lorsqu'il s'agit d'une antenne fixe. En variante, lorsqu'il s'agit d'une antenne mobile, le module de mise en mouvement 22 permet de contrôler simultanément l'actionneur de cette antenne et au moins un actionneur du porteur.

Selon le deuxième exemple de réalisation, c'est-à-dire lorsque le système 10 comprend au moins deux antennes 14, le module de mise en mouvement 22 est apte à engendrer un mouvement du centre de phase apparent des antennes 14 de manière électrique.

En d'autres mots, dans ce cas, les positions physiques des antennes 14 ne sont pas modifiées mais la transmission des signaux GNSS reçus par ces antennes est commutée selon la loi de commande.

Dans ce cas, le module de mise en mouvement 22 peut alors se présenter sous la forme d'un multiplexeur radiofréquence électronique "N entrées vers une sortie", avec N le nombre d'antennes, et l'unique sortie étant connectée à l'antenne désignée par la commande appliquée au multiplexeur.

Le module de commande 23 permet de déterminer la loi de commande. Cette loi est déterminée en fonction du mouvement souhaité du centre de phase apparent de la ou des antennes 14.

En particulier, si on s'intéresse aux angles de cap et de tangage, le mouvement du centre de phase apparent devrait être selon l'axe longitudinal du porteur.

Si on s'intéresse à l'angle de roulis, le mouvement devrait être selon l'axe transversal du porteur.

Si on s'intéresse aux trois angles, alors le mouvement devra se déplacer suivant les deux axes longitudinaux et transverses.

Dans le cas où le mouvement du centre de phase est engendré électriquement, deux antennes 14 sont suffisantes pour déterminer au moins deux composantes de l'attitude du porteur comme par exemple le cap et le tangage, et trois antennes 14 sont suffisantes pour déterminer chaque composante de l'attitude du porteur.

En outre, la loi de commande est choisie en fonction de la nature du mouvement engendré par le module de mise en mouvement 22.

Par exemple, lorsqu'il s'agit d'un mouvement obtenu par commutation électronique de deux antennes, la loi de commande présente par exemple un signal scalaire, prenant deux valeurs -sélection de la première antenne et sélection de la deuxième antenne-, de manière pseudo-aléatoire à une fréquence de quelques Hz. La fréquence de commutation est choisie suffisamment rapide par rapport à la bande passante des variations d'attitude que l'on veut pouvoir observer, et suffisamment lente par rapport à la bande passante des boucles de poursuite du récepteur. Le choix du rapport cyclique de commutation - séquence à rapport cyclique fixe ou séquence pseudo-aléatoire - permet de découpler le mouvement naturel de la valeur observable et le mouvement commandé de la valeur observable. La valeur observable contient les effets de ces deux mouvements : par exemple si la valeur observable est le vecteur vitesse géographique, ce vecteur porte les changements de vitesse provoqués par la trajectoire du porteur et les changements de vitesse provoqués par la commutation des antennes. Seule cette deuxième composante porte l'information d'attitude qu'on cherche à connaitre ici.

De plus, suivant les caractéristiques du mouvement apparent de l'antenne et la nature des signaux GNSS utilisés, la présence de ce mouvement peut compromettre certaines fonctionnalités du récepteur, comme la démodulation des données transmises sur certaines composantes du signal GNSS ou le fonctionnement à faible rapport signal à bruit. Il peut être alors avantageux de stopper le mouvement de l'antenne pendant certaines phases de la mission ou de l'activer par bribe de temps.

Ainsi, les paramètres de la loi de commande $c(t)$ - mouvement à un ou deux degrés de liberté, fréquence de répétition du mouvement, séquencement plus ou moins régulier, fonctionnement continu ou par bribe - fixent le service rendu, sa performance et la complexité du dispositif 16 : fourniture de deux ou trois angles d'attitude, tolérance à une dynamique de variation d'attitude du porteur plus ou moins grande, tolérance à une dynamique de la trajectoire du porteur plus ou moins grande, service rendu continument ou pendant certaines phases de la mission. Ces paramètres sont aussi choisis en fonction de certaines caractéristiques du récepteur GNSS utilisé, comme la bande passante de ses boucles de poursuite du signal GNSS, qui peut sensiblement changer d'un fabricant à l'autre.

De manière générale, la loi de commande $c(t)$ est donc choisie de manière à pouvoir séparer les variations de la vitesse géographique causée par la trajectoire du porteur et celles causées par la mise en mouvement du centre de phase apparent.

Selon un exemple particulier de l'invention, la loi de commande $c(t)$ est un signal carré qui par exemple dans le cas de deux antennes, active et désactive alternativement chacune des antennes selon une fréquence prédéterminée.

Le module de détermination 24 est configuré pour déterminer l'orientation du porteur à partir de la valeur observable déterminée par le récepteur GNSS 12 et de la loi de commande déterminée par le module de commande 23.

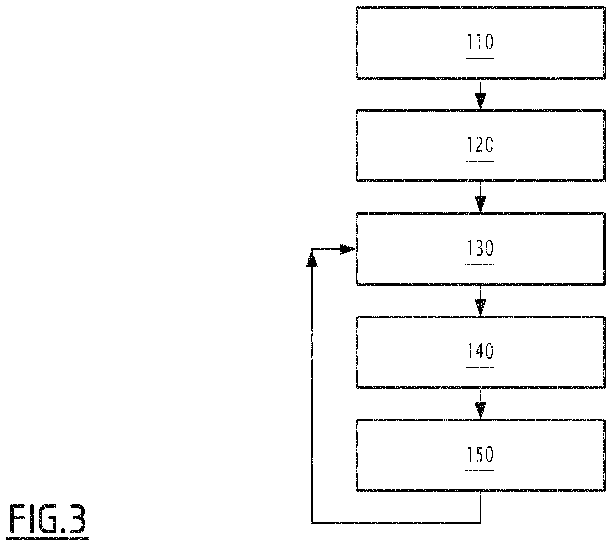

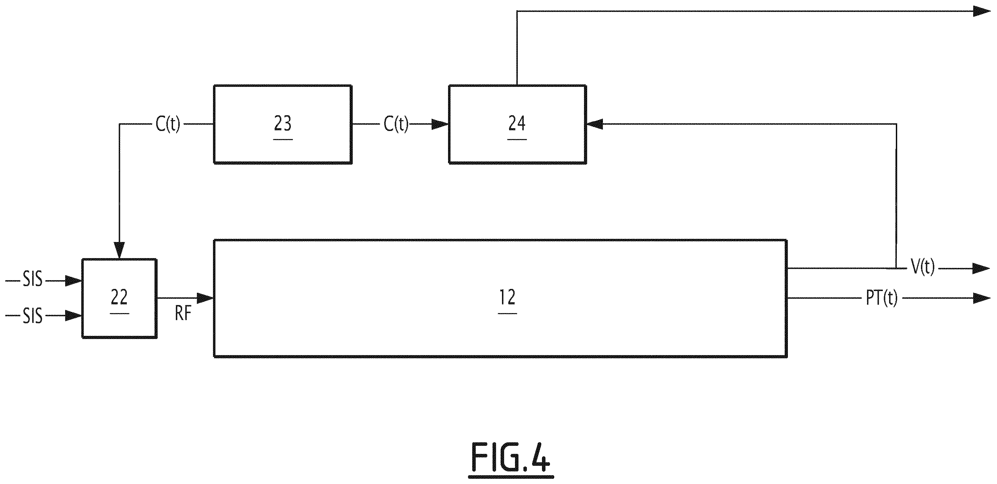

Le procédé de détermination mis en œuvre par le dispositif de détermination 16 selon l'invention sera désormais expliqué en référence à la figure 3 présentant un organigramme de ce procédé et à la figure 4 expliquant le fonctionnement de ce dispositif 16. Comme expliqué précédemment, avantageusement, ce procédé est mis en œuvre sous l'hypothèse que les signaux GNSS se propagent selon des trajets directs.

Lors d'une étape initiale 110, le module de commande 23 détermine une loi de commande $c(t)$.

Comme expliqué précédemment, cette loi de commande $c(t)$ est déterminée en fonction du mouvement souhaité du centre de phase apparent ainsi que de la nature du module de mise en mouvement 22.

L'étape 110 est par exemple mise en œuvre préalablement à l'utilisation du système 10 dans le porteur.

Les étapes suivantes sont mises en œuvre lorsque le récepteur GNSS 12 est en cours de fonctionnement et détermine la valeur observable et la position du porteur $PT$.

En particulier, lors de l'étape 120, le module de mise en mouvement 22 met en mouvement le centre de phase apparent selon la loi de commande $c(t)$ déterminée par le module de commande 23.

Lors de l'étape 130 suivante, le module de détermination 24 acquiert la valeur observable issue du récepteur GNSS 12 qui varie alors notamment en fonction de la loi de commande $c(t)$.

Pour simplifier la description par la suite, il sera considéré que la valeur observable présente la vitesse $\vec{V}$ résolue par le récepteur GNSS 12.

Pour simplifier la description, il sera aussi considéré dans la suite qu'on s'intéresse à la résolution des deux angles de cap et de tangage. L'obtention de ces deux angles est équivalente à l'obtention du vecteur unitaire porté par l'axe longitudinal de porteur.

Pour simplifier la description, il sera également considéré dans la suite que le mouvement du centre de phase commandé est obtenu en commutant deux antennes séparées d'une distance $d$ connue et positionnées dans l'axe longitudinal du porteur. On comprend ainsi que la résolution des deux angles de cap et de tangage est équivalente à l'obtention des trois coordonnées dans le repère géographique du vecteur $\vec{d}$ séparant les deux antennes, appelé par la suite vecteur d'intérêt. Dans le cas d'une seule antenne mobile, le vecteur $\vec{d}$ correspond au vecteur de déplacement du centre de phase apparent qui alors effectué soit selon l'axe longitudinal du porteur (lorsque les angles de cap et de tangage sont nécessaires), soit selon l'axe transversal du porteur (lorsque l'angle de roulis est nécessaire).

Lors de l'étape 140 suivante, le module de détermination 24 détermine ce vecteur $\vec{d}$, de la manière qui est détaillée ci-après.

On note comme suit le vecteur vitesse et le vecteur vitesse augmenté d'une quatrième ligne contenant la valeur $DH$ signifiant la dérive d'horloge du récepteur GNSS 12 par rapport à l'horloge du système GNSS considéré :

$$\vec{V} = (V_X, V_Y, V_Z)^T$$

$$\overrightarrow{V^+} = (V_X, V_Y, V_Z, DH)^T$$

Il est connu que le récepteur GNSS 12 calcule usuellement le vecteur $V^+$ à partir d'un calcul de moindre carré appliqué aux N mesures de pseudo-vitesse obtenues pour chacun des satellites GNSS poursuivis et qu'on note ici $PRR_1$, $PRR_2$, ..., $PRR_N$.

En notant $H$ la matrice d'observation de dimension N x 4, contenant sur la k-ième ligne les trois coordonnées du vecteur axe à vue $\overrightarrow{los_k}$ et un "1", et en notant $Z$ le vecteur formé des N mesures de pseudo-vitesse :

$$\vec{Z} = (PRR_1, PRR_2, ... \, PRR_N)^T$$

il est connu que la relation qui décrit comment une petite variation du vecteur Z, notée $\delta Z$, entraine une petite variation du vecteur $V^+$, notée $\delta V^+$, est la suivante :

$$\overrightarrow{\delta V^+} = (H^T . H)^{-1} . H^T . \overrightarrow{\delta Z} \qquad (Rel\ 1).$$

En particulier, par vecteur axe à vue $\overrightarrow{los_k}$ relatif à k-ième satellite, on entend le vecteur unitaire contenant les trois coordonnées du segment joignant le porteur au satellite.

Il est connu également que la différence de marche, exprimée en mètres, entre d'une part le chemin suivi par le signal émis par le k-ième satellite et reçu par la première antenne et d'autre part le chemin suivi par le signal émis par le k-ième satellite et reçu par la deuxième antenne au même instant, s'écrit comme le produit scalaire entre le vecteur $\vec{d}$ et le vecteur $\overrightarrow{los_k}$

$$ddm_k = \overrightarrow{los_k} * \vec{d} \ .$$

Si la commande $c(t)$ commute les deux antennes de manière égale à la période $T$ exprimée en secondes, et que la boucle de poursuite du récepteur restitue la composante fréquentielle principale de ce mouvement, alors cela provoque une variation quasi-sinusoïdale de la pseudo-vitesse mesurée par le récepteur qui est de la forme :

$$\delta PRR_k = \frac{d}{dt}\left(\frac{2}{\pi}.ddm_k.\sin\left(\frac{2\pi}{T}.t\right)\right)$$

$$= \frac{4}{T}.\cos\left(\frac{2\pi}{T}.t\right).ddm_k \ \text{ exprimée en m/s.}$$

la quantité $2/\pi$ étant l'amplitude de la composante sinusoïdale principale dans la composition harmonique d'un signal périodique carré d'amplitude unitaire.

De manière plus générale, on note $b(t)$ la fonction qui module la mesure de pseudo-vitesse :

$$\delta PRR_k = b(t).ddm_k \ \text{ exprimée en m/s.}$$

La fonction $b(t)$ dépend de la commande $c(t)$ et de la bande passante de la boucle de poursuite du signal à l'intérieur du récepteur : si le mouvement du centre de phase est trop rapide, la bande passante du récepteur aura tendance à trop réduire l'amplitude de l'effet induit par la commande sur la pseudo-vitesse. Ce qui n'est pas l'effet recherché par le dispositif.

En appliquant les relations ci-dessus dans la relation 1, et en prenant en compte que la commande $c(t)$ a le même effet sur tous les satellites poursuivis, on obtient :

$$\overrightarrow{\delta V^+} = (H^T.H)^{-1}.H^T.b(t).[\overrightarrow{los_1} * \vec{d}, \overrightarrow{los_2} * \vec{d}, ... \overrightarrow{los_N} * \vec{d}]^T$$

En notant $\overrightarrow{d^+}$ le vecteur $\vec{d}$ augmenté d'une quatrième ligne à 0, la relation ci-dessus devient :

Puis,

$$\overrightarrow{\delta V^+} = (H^T.H)^{-1}.H^T.b(t).H.\overrightarrow{d^+}$$

Puis,

$$\overrightarrow{\delta V^+} = b(t).(H^T.H)^{-1}.H^T.H.\overrightarrow{d^+}$$

$$\overrightarrow{\delta V^+} = b(t).\overrightarrow{d^+}$$

Enfin, en conservant seulement les 3 premières lignes des vecteurs :

$$\overrightarrow{\delta V} = b(t).\vec{d}$$

On comprend ainsi que la valeur observable, la vitesse géographique produite par le récepteur 12 dans l'exemple ci-avant, est modifiée par l'application de la commande, et que cette modification $\overrightarrow{\delta V}$ porte le vecteur d'intérêt $\vec{d}$ modulé par le signal $b(t)$ défini lui-même par le signal de commande $c(t)$ et la bande passante connue du récepteur 12.

Le vecteur d'intérêt $\vec{d}$ est alors obtenu à l'étape 140 en éliminant la fonction modulante $b(t)$ dans la relation ci-dessus. Dans l'exemple où la commande $c(t)$ est un signal carré, la fonction $b(t)$ est alors un signal pseudo-sinusoïdal dont la fréquence est celle de $c(t)$. Le travail de l'étape 140, pour accéder aux trois coordonnées du vecteur $\vec{d}$, consiste alors à mesurer l'amplitude de cette composante sinusoïdale, dont la fréquence est connue, sur les trois coordonnées du vecteur vitesse.

Une fois que les trois coordonnées du vecteur d'intérêt $\vec{d}$ sont connues, l'étape 150 en déduit les angles de cap *C* et tangage *T*, de manière connue, par exemple, en considérant les coordonnées Nord, Est et Verticale :

$$C = acos\frac{d_{nord}}{\sqrt{d_{nord}^2 + d_{est}^2}}$$

$$T = asin\frac{d_{vertical}}{\sqrt{d_{nord}^2 + d_{est}^2 + d_{vertical}^2}}.$$

À la fin de cette étape 150, le module de détermination 24 transmet la ou les composantes déterminées par exemple à un autre système avionique et/ou l'affiche au pilote. Les étapes 130 à 150 peuvent ensuite être réitérées pour mettre à jour l'attitude du porteur.

On conçoit alors que la présente invention présente un certain nombre d'avantages.

En particulier, l'invention permet de déterminer l'attitude d'un porteur en utilisant un récepteur GNSS doté du seul service de localisation et une mise en mouvement du centre de phase selon une loi connue. Contrairement aux récepteurs GNSS spécialement conçus pour fournir un service de détermination d'attitude à partir de plusieurs antennes, les récepteurs dotés du seul service de localisation, et donc gérant une seule antenne, sont largement répandus dans de nombreux domaines d'application.

**Revendications**

1. Dispositif de détermination (16) de l'attitude d'un porteur, le porteur comprenant un récepteur GNSS apte à recevoir des signaux GNSS issus d'une ou de plusieurs antennes (14) disposées selon des positions connues par rapport au porteur et définissant un centre de phase apparent, le récepteur GNSS (12) étant apte à fournir une valeur observable déterminée à partir des signaux GNSS reçus ;

   le dispositif de détermination (16) comprenant :

      - un module de mise en mouvement (22) configuré pour engendrer un mouvement du centre de phase apparent dans un référentiel du porteur selon une loi de commande prédéterminée ;
      - un module de commande (23) configuré pour déterminer la loi de commande ;
      - un module de détermination (24) configuré pour déterminer une orientation absolue d'un vecteur d'intérêt à partir d'au moins une valeur observable fournie par le récepteur GNSS (12) et de la loi de commande déterminée par le module de commande (23) ;

   le module de détermination (24) étant configuré en outre pour déterminer au moins une composante de l'attitude du porteur à partir de l'orientation absolue du vecteur d'intérêt déterminée.

2. Dispositif de détermination (16) suivant la revendication 1, dans lequel le vecteur d'intérêt est obtenu en mesurant l'amplitude d'une modulation de la valeur observable, cette modulation de la valeur observable étant causée par une mise en mouvement périodique du centre de phase apparent.

3. Dispositif de détermination (16) selon la revendication 1 ou 2, dans lequel la valeur observable comprend au moins une, de préférence deux et avantageusement trois, des coordonnées de vitesse géographique fournie par le récepteur GNSS (12).

4. Dispositif de détermination (16) selon l'une quelconque des revendications précédentes, dans lequel, lorsque le porteur comprend au moins deux antennes (14), le module de mise en mouvement (22) est un commutateur apte à commuter la transmission au récepteur GNSS (12) des signaux reçus par les antennes (14), pour engendrer un mouvement électrique du centre de phase apparent selon la loi de commande.

5. Dispositif de détermination (16) selon la revendication 4, dans lequel, lorsque le porteur comprend deux antennes (14) commutées, la loi de commande est un signal carré.

6. Dispositif de détermination (16) selon l'une quelconque des revendications 1 à 3, dans lequel le module de mise en mouvement (22) est apte à contrôler au moins un actionneur mécanique du porteur et/ou de la ou de chaque antenne (14), pour engendrer un mouvement mécanique du centre de phase apparent selon la loi de commande.

7. Dispositif de détermination (16) selon l'une quelconque des revendications précédentes, dans lequel ladite composante de l'attitude du porteur correspond à l'angle de cap, à l'angle de roulis ou à l'angle de tangage du porteur.

8. Dispositif de détermination (16) selon la revendication 7, dans lequel la loi de commande définit un déplacement du centre de phase apparent selon un axe longitudinal du porteur lorsque la détermination des angles de cap et de tangage est nécessaire.

9. Dispositif de détermination (16) selon la revendication 7 ou 8, dans lequel la loi de commande définit un déplacement du centre de phase apparent selon un axe transversal du porteur lorsque la détermination de l'angle de roulis est nécessaire.

10. Dispositif de détermination (16) selon l'une quelconque des revendications précédentes, dans lequel le vecteur d'intérêt correspond à la direction absolue de déplacement du centre de phase apparent.

11. Dispositif de détermination (16) selon l'une quelconque des revendications précédentes, dans lequel lorsque la valeur observable est une mesure de la vitesse résolue du porteur, le vecteur d'intérêt est déterminé à partir de la relation suivante :

$$\delta V = b(t).(d_X, d_Y, d_Z)^T$$

où

$\delta V$ est un vecteur d'écart de vitesse résolue ;
$b(t)$ est une fonction dépendante de la loi de commande ;
$(d_X, d_Y, d_Z)^T$ est le vecteur d'intéret.

12. Système d'aide au pilotage (10) d'un porteur, comprenant :

- un récepteur GNSS (12) apte à fournir une valeur observable ;
- une ou plusieurs antennes (14) disposées selon des positions connues par rapport au porteur et définissant un centre de phase apparent ;
- un dispositif de détermination (16) de l'attitude du porteur, selon l'une quelconque des revendications précédentes.

13. Procédé de détermination de l'attitude d'un porteur, le porteur comprenant un récepteur GNSS apte à recevoir des signaux GNSS issus d'une ou de plusieurs antennes (14) disposées selon des positions connues par rapport au porteur et définissant un centre de phase apparent, le récepteur GNSS (12) étant apte à fournir une valeur observable déterminée à partir des signaux GNSS reçus ;
le procédé comprenant :

- détermination (110) d'une loi de commande du centre de phase apparent ;
- mise en mouvement (120) du centre de phase apparent dans un référentiel du porteur selon la loi de commande :

- détermination (140) d'une orientation absolue d'un vecteur d'intérêt à partir d'au moins une valeur observable fournie par le récepteur GNSS et de la loi de commande ;
- détermination (150) d'au moins une composante de l'attitude du porteur à partir de l'orientation absolue du vecteur d'intérêt déterminée.

**Patentansprüche**

1. Bestimmungsvorrichtung (16) der Lage eines Trägers, der Träger umfassend einen GNSS-Empfänger umfasst, der geeignet ist, um GNSS-Signale von einer oder mehreren Antennen (14) zu empfangen, die in bekannten Positionen in Bezug auf den Träger angeordnet sind und ein scheinbares Phasenzentrum definieren, wobei der GNSS-Empfänger (12) geeignet ist, zu um einen beobachtbaren Wert bereitzustellen, der anhand der empfangenen GNSS-Signale bestimmt wird;
die Bestimmungsvorrichtung (16) umfassend:

   - ein Bewegungsmodul (22), das konfiguriert ist, um eine Bewegung des scheinbaren Phasenzentrums in einem Bezugssystem des Trägers gemäß einer vorbestimmten Steuerregel zu erzeugen;
   - ein Steuermodul (23), das konfiguriert ist, um die Steuerregel zu bestimmen;
   - ein Bestimmungsmodul (24), das konfiguriert ist, um anhand mindestens eines vom GNSS-Empfänger (12) bereitgestellten beobachtbaren Werts und anhand der vom Steuermodul (23) bestimmten Steuerregel eine absolute Ausrichtung eines Vektors von Interesse zu bestimmen;

   wobei das Bestimmungsmodul (24) ferner konfiguriert ist, um anhand der bestimmten absoluten Ausrichtung des Vektors von Interesse mindestens eine Komponente der Lage des Trägers zu bestimmen.

2. Bestimmungsvorrichtung (16) nach Anspruch 1, wobei der Vektor von Interesse durch Messen der Amplitude einer Modulation des beobachtbaren Werts erlangt wird, wobei diese Modulation des beobachtbaren Werts durch periodisches Bewegen des scheinbaren Phasenzentrums verursacht wird.

3. Bestimmungsvorrichtung (16) nach Anspruch 1 oder 2, wobei der beobachtbare Wert mindestens eine, vorzugsweise zwei und vorteilhafterweise drei, der von dem GNSS-Empfänger (12) bereitgestellten geografischen Geschwindigkeitskoordinaten umfasst.

4. Bestimmungsvorrichtung (16) nach einem der vorherigen Ansprüche, wobei, wenn der Träger mindestens zwei Antennen (14) umfasst, das Bewegungsmodul (22) ein Schalter ist, der geeignet ist, um die Übertragung der von den Antennen (14) empfangenen Signale an den GNSS-Empfänger (12) zu schalten, um eine elektrische Bewegung des scheinbaren Phasenzentrums gemäß der Steuerregel zu erzeugen.

5. Bestimmungsvorrichtung (16) nach Anspruch 4, wobei, wenn der Träger zwei geschaltete Antennen (14) umfasst, die Steuerregel ein Rechtecksignal ist.

6. Bestimmungsvorrichtung (16) nach einem der Ansprüche 1 bis 3, wobei das Bewegungsmodul (22) geeignet ist, um mindestens einen mechanischen Aktuator des Trägers und/oder der oder jeder Antenne (14) zu steuern, um eine mechanische Bewegung des scheinbaren Phasenzentrums gemäß der Steuerregel zu erzeugen.

7. Bestimmungsvorrichtung (16) nach einem der vorherigen Ansprüche, wobei die Komponente der Lage des Trägers dem Kurswinkel, dem Rollwinkel oder dem Nickwinkel des Trägers entspricht.

8. Bestimmungsvorrichtung (16) nach Anspruch 7, wobei die Steuerregel eine Bewegung des scheinbaren Phasenzentrums entlang einer Längsachse des Trägers definiert, wenn die Bestimmung des Kurs- und des Nickwinkels erforderlich ist.

9. Bestimmungsvorrichtung (16) nach Anspruch 7 oder 8, wobei die Steuerregel eine Bewegung des scheinbaren Phasenzentrums entlang einer Querachse des Trägers definiert, wenn die Bestimmung des Rollwinkels erforderlich ist.

10. Bestimmungsvorrichtung (16) nach einem der vorherigen Ansprüche, wobei der Vektor von Interesse der absoluten Bewegungsrichtung des scheinbaren Phasenzentrums entspricht.

11. Bestimmungsvorrichtung (16) nach einem der vorherigen Ansprüche, wobei, wenn der beobachtbare Wert eine Messung der aufgelösten Geschwindigkeit des Trägers ist, der Vektor von Interesse anhand der folgenden Beziehung bestimmt wird:

$$\delta V = b(t).(d_X, d_Y, d_Z)^T$$

wobei

$\delta V$ ein Vektor der Abweichung von der aufgelösten Geschwindigkeit ist;
$b(t)$ eine von der Steuerregel abhängige Funktion ist;
$(d_x, d_y, d_z)^T$ der Vektor von Interesse ist.

12. Leitunterstützungssystem (10) eines Trägers, umfassend:

- einen GNSS-Empfänger (12), der geeignet ist, um einen beobachtbaren Wert bereitzustellen;
- eine oder mehrere Antennen (14), die gemäß bekannten Positionen in Bezug auf den Träger angeordnet sind und ein scheinbares Phasenzentrum definieren;
- eine Bestimmungsvorrichtung (16) der Lage des Trägers nach einem der vorherigen Ansprüche.

13. Bestimmungsverfahren der Lage eines Trägers, der Träger umfassend einen GNSS-Empfänger umfasst, der geeignet ist, um GNSS-Signale von einer oder mehreren Antennen (14) zu empfangen, die in bekannten Positionen in Bezug auf den Träger angeordnet sind und ein scheinbares Phasenzentrum definieren, wobei der GNSS-Empfänger (12) geeignet ist, zu um einen beobachtbaren Wert bereitzustellen, der anhand der empfangenen GNSS-Signale bestimmt wird;
das Verfahren umfassend:

- Bestimmen (110) einer Steuerregel für das scheinbare Phasenzentrum;
- Bewegen (120) des scheinbaren Phasenzentrums gemäß der Steuerregel in einem Bezugssystem des Trägers;
- Bestimmen (140) einer absoluten Ausrichtung eines Vektors von Interesse anhand mindestens eines beobachtbaren Werts, der von dem GNSS-Empfänger bereitgestellt wird, und der Steuerregel;
- Bestimmen (150) von mindestens einer Komponente der Lage des Trägers anhand der bestimmten absoluten Ausrichtung des Vektors von Interesse.

## Claims

1. A device (16) for determining the attitude of a carrier, the carrier comprising a GNSS receiver apt to receive GNSS signals from one or a plurality of antennas (14) arranged in known positions with respect to the carrier and defining an apparent phase center, the GNSS receiver (12) being apt to supply an observable value determined from the received GNSS signals;

   the determination device (16) comprising:

   - a movement generation module (22) configured for generating a movement of the apparent phase center in a carrier basis according to a predetermined control law;
   - a control module (23) configured for determining the control law;
   - a determination module (24) configured for determining an absolute orientation of a vector of interest from at least one observable value supplied by the GNSS receiver (12) and from the control law determined by the control module (23);

   the determination module (24) being further configured for determining at least one component of the attitude of the carrier, from the absolute orientation of the determined vector of interest.

2. The determination device (16) according to claim 1, wherein the vector of interest is obtained by measuring the amplitude of a modulation of the observable value, said modulation of the observable value being caused by a periodic setting in movement of the apparent phase center.

3. The determination device (16) according to claim 1 or 2, wherein the observable value comprises at least one, preferentially two and advantageously three, of the geographic velocity coordinates provided by the GNSS receiver (12).

4.   the determination device (16) according to any of the preceding claims, wherein, when the carrier comprises at least two antennas (14), the movement generation module (22) is a switch apt to switch the transmission to the GNSS receiver (12) of the signals received by the antennas (14), so as to generate an electrical movement of the apparent phase center according to the control law.

5.   The determination device (16) according to claim 4, wherein when the carrier comprises two switched antennas (14), the control law being a square signal.

6.   The determination device (16) according to any of claims 1 to 3, wherein the movement module (22) is able to control at least one mechanical actuator of the carrier and/or of the or each antenna (14), so as to generate a mechanical movement of the apparent phase center according to the control law.

7.   The determination device (16) according to any of the preceding claims, wherein said component of the attitude of the carrier corresponds to the heading angle, to the roll angle or to the pitch angle of the carrier.

8.   The determination device (16) according to claim 7, wherein the control law defines a displacement of the apparent phase center along a longitudinal axis of the carrier when the determination of the heading and the pitch angles is required.

9.   The determination device (16) according to claim 7 or 8, wherein the control law defines a displacement of the apparent phase center along a transverse axis of the carrier when the determination of the roll angle is required.

10.  The determination device (16) according to any of the preceding claims, wherein the vector of interest corresponds to the absolute direction of displacement of the apparent phase center.

11.  The determination device (16) according to any of the preceding claims, wherein when the observable value is a measurement of the resolved velocity of the carrier, the vector of interest is determined from the following relationship:

$$\delta V = b(t).(d_X, d_Y, d_Z)^T$$

where

$\delta V$ is a resolved velocity deviation vector;
$b(t)$ is a function dependent on the control law;
$(d_X, d_Y, d_Z)^T$ is the vector of interest.

12.  A system (10) for assisting with the piloting of a carrier, comprising:

- a GNSS receiver (12) apt to provide an observable value;
- one or a plurality of antennas (14) arranged in known positions with respect to the carrier and defining an apparent phase center;
- a device (16) for determining the attitude of a carrier, according to any of the preceding claims.

13.  A method for determining the attitude of a carrier, the carrier comprising a GNSS receiver apt to receive GNSS signals from one or a plurality of antennas (14) arranged in known positions with respect to the carrier and defining an apparent phase center, the GNSS receiver (12) being apt to supply an observable value determined from the received GNSS signals;
the method comprising:

- determination (110) of a control law of the apparent phase center;
- setting the apparent phase center in movement (120) in a carrier basis according to the control law;
- determination (140) of an absolute orientation of a vector of interest from at least one observable value provided by the GNSS receiver and from the control law;
- determination (150) of at least one component of the attitude of the carrier, from the absolute orientation of the determined vector of interest.

FIG.1

FIG.2

| 110 | → | 120 | → | 130 | → | 140 | → | 150 |

FIG.3

EP 4 285 159 B1

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2674783 A1